## Europäisches Patentamt

## European Patent Office

## Office européen des brevets

(19)

(11) Veröffentlichungsnummer: **0 207 240**
**B1**

# (12) EUROPÄISCHE PATENTSCHRIFT

(45) Veröffentlichungstag der Patentschrift:
27.09.89

(51) Int. Cl.⁴: **G01L 1/22**, G01G 3/14

(21) Anmeldenummer: **86105301.5**

(22) Anmeldetag: **17.04.86**

(54) Kraftmesszelle mit einem Kraftsensor in Form eines Biegeträgers.

(30) Priorität: **05.07.85 CH 2902/85**

(43) Veröffentlichungstag der Anmeldung:
**07.01.87 Patentblatt 87/2**

(45) Bekanntmachung des Hinweises auf die Patenterteilung:
**27.09.89 Patentblatt 89/39**

(84) Benannte Vertragsstaaten:
**DE FR GB**

(56) Entgegenhaltungen:
FR-A- 1 538 990
GB-A- 2 107 072
JP-A-59 067 424
US-A- 3 180 139
US-A- 4 419 902

PHILIPS TECHNICAL REVIEW, Band 39, Nr. 3/4, 1980,
Seiten 94-101, Eindhoven, NL; K. BETHE et al.:
"Thin-film strain-gauge transducers"
FEINWERKTECHNIK, Band 74, Nr. 8, August 1970,
Seiten 321-324, Carl Hanser Verlag, München, DE; H.A.
SCHMIDT: "Kupferdraht - ein neues Werkzeug für die
Feinwerktechnik"

**Die Akte enthält technische Angaben, die nach dem
Eingang der Anmeldung eingereicht wurden und die
nicht in dieser Patentschrift enthalten sind.**

(73) Patentinhaber: **Mettler Instrumente AG, Im Langacher,
CH-8606 Greifensee(CH)**

(72) Erfinder: **Bull, David Charles, Ringwilerstrasse 21,
CH-8340 Hinwil(CH)**
Erfinder: **Hasler, Jürg, St. Georgenstrasse 52,
CH-8400 Winterthur(CH)**

**Beschreibung**

Die Erfindung betrifft eine Kraftmesszelle mit einem Kraftsensor in Form eines Biegeträgers, bei dem das eine Trägerende als biegesteifer Basisteil und das andere Trägerende als biegesteifer Lastaufnehmer ausgebildet sind und der Lastaufnehmer durch zwei biegeelastische Lenker mit durch Materialschwächung ausgeprägten Biegeabschnitten mit dem Basisteil verbunden ist, und mit an den Biegeabschnitten wenigstens eines Lenkers angeordneten Dehnungsmessstreifen zur Erzeugung eines von der zu messenden Kraft abhängigen elektrischen Signals

Kraftmesszellen mit Kraftsensoren vom Biegeträgertyp sind bekannt (DE-OS 27 40 668, DE-OS 28 13 782). Ausserdem sind Kraftmesszellen im Handel, bei denen die Dehnungsmessstreifen an den Biegeabschnitten der biegeelastischen Lenker angeordnet sind.

Bei den bekannten Kraftsensoren dieser Art ist die mittlere Materialdicke an den beiden Biegeabschnitten eines biegeelastischen Lenkers gleich gross. Dieser Umstand hat zur Folge, dass bei Belastung des Kraftsensors die Spannungen an den beiden Biegeabschnitten eines Lenkers verschieden gross sind. Durch eine ideale Parallelführung des Lastaufnehmers in bezug auf den Basisteil liesse sich erreichen, dass an beiden Biegeabschnitten jedes Lenkers gleiche Biegemomente auftreten. Diesen einzelnen Biegemomenten ist jedoch bei der praktischen Ausführung des Biegeträgers, wobei die Lenker ein gewisses Mass an Steifigkeit haben, das Biegemoment des ganzen Biegeträgers überlagert. Daraus resultiert an den dem Basisteil näher liegenden Biegeabschnitten der Lenker ein höheres Biegemoment als an den dem Lastaufnehmer näher liegenden Biegeabschnitten, wobei der Einfluss des überlagerten Biegemomentes mit zunehmender Steifigkeit der Lenker zunimmt.

Die ungleiche Beanspruchung der Biegeabschnitte hat zur Folge, dass die Belastbarkeit des Kraftsensors durch die zulässige Spannung an den stärker beanspruchten Biegeabschnitten begrenzt ist, während der Belastungsbereich der weniger stark beanspruchten Biegeabschnitte nicht voll ausgenützt ist. Ausserdem besteht die Gefahr, dass die Spannung an den stärker beanspruchten Biegeabschnitten das zulässige Mass überschreitet. Die gewünschte Proportionalität zwischen der zu messenden Kraft und dem von dieser Kraft abhängigen elektrischen Signal und die erforderliche Sicherheit gegen Ueberlastung lassen sich unter diese Umständen nicht ohne weiteres gewährleisten.

Der Zweck der Erfindung beseht darin, eine Kraftmesszelle zu schaffen, bei der eine bessere Linearität der Kraft/Signal-Charakteristik und eine grössere Ueberlastsicherheit erreicht werden kann.

Um die genannte Aufgabe zu lösen, ist bei der Kraftmesszelle nach der Erfindung die mittlere Materialdicke an den dem Basisteil näher liegenden Biegeabschnitten der Lenker um soviel grösser als an den anderen Biegeabschnitten, dass an allen Biegeabschnitten unter Last gleich grosse Spannungen auftreten.

Mit dieser Massnahme erreicht man, dass an allen Biegeabschnitten und an diesen zugeordneten Dehnungsmessstreifen das gleiche Mass an Dehnung bzw. Stauchung auftritt. Dadurch wird die Einhaltung des Hookeschen Gesetzes erleichtert und die Sicherheit gegen Ueberlastung erhöht.

Ein weiterer, die Linearität zwischen Kraft und Signal beeinträchtigender Mangel bekannter Kraftsensoren der eingangs genannten Art besteht darin, dass unter Last die Spannung längs der Strecke eines Biegeabschnittes variiert, und zwar deshalb, weil die Biegeabschnitte an den einander zugewandten Seiten der Lenker herkömmlicherweise durch Mantelflächen kreisförmiger Materialaussparungen begrenzt sind. Infolgedessen werden die an den Biegeabschnitten angeordneten Dehnungsmessstreifen auf ihrer Länge ungleichmässig beansprucht.

Dieser Nachteil lässt sich vermeiden, wenn die Biegeabschnitte keilartig ausgebildet sind (GB-A 2 107 072, US-A 4 419 902, JP-A 5 967 424), wobei jeweils das dickere Ende eines Biegeabschnittes dem diesem näher gelegenen Trägerende zugewandt ist. Mit dieser Massnahme lässt sich eine gleichmässige Materialdehnung bzw. -stauchung über die ganze Länge des Biegeabschnittes und damit eine weitere Verbesserung des Linearität in der Kraft/-Signal-Charakteristik erreichen.

Die Erfindung betrifft auch ein Verfahren zur Herstellung der erfindungsgemässen Kraftmesszelle, das darin besteht, dass das Längsprofil des Kraftsensors durch Funkenerosion erzeugt wird.

Besonders geeignet erweist sich dieses Verfahren zur gleichzeitigen Herstellung mehrerer Kraftmesszellen. Dabei wird mit Vorteil so vorgegangen, dass am Querprofil einer länglichen Platte das Längsprofil der Kraftsensoren über die ganze Plattenlänge im Funkenerosionsverfahren mit Drahtelektrode erzeugt wird, dass auf wenigstens einer Oberfläche der Platte eine Mehrzahl jeweils gleicher Masken für das stufenweise Auftragen von Dünnschichtsensoren durch ein Mutlikopieverfahren hergestellt wird, und dass nach dem Auftragen der Dünnschichtsensoren und dem Erzeugen des Längsprofils die Platte durch quer zur Längsrichtung der Platte verlaufende Trennschnitte in die einzelnen Kraftmesszellen zerteilt wird.

In der Zeichnung sind Ausführungsbeispiele der Erfindung dargestellt, und zwar zeigen:

Fig. 1 die erfindungsgemässe Kraftmesszelle im Längsprofil und

Fig. 2 eine vorbereitete Platte zur gleichzeitigen Herstellung mehrerer Kraftmesszellen nach Fig. 1.

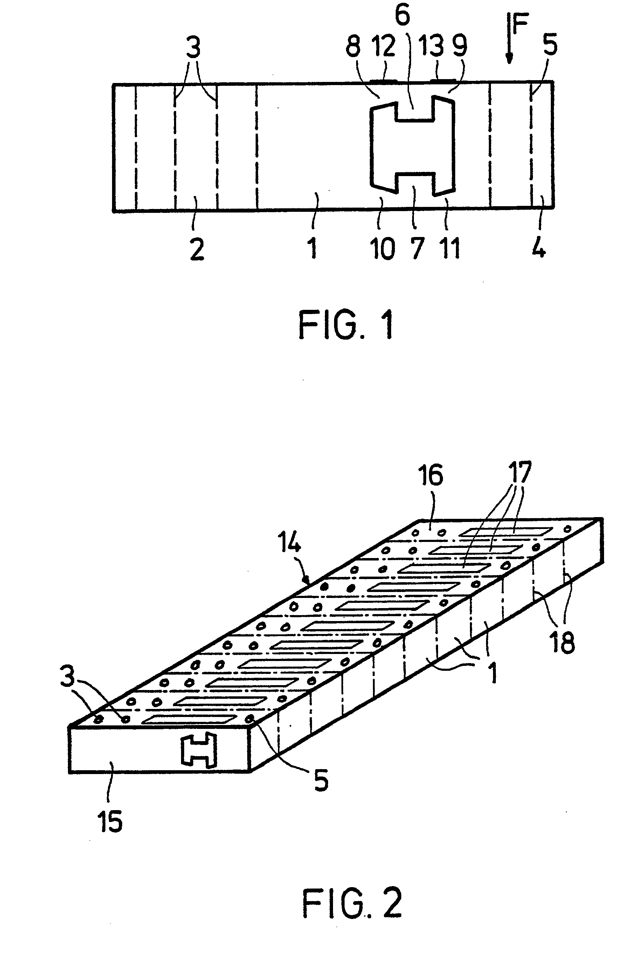

Die in Fig. 1 dargestellte Kraftmesszelle weist einen Kraftsensor 1 in Form eines Biegeträgers auf. Das eine Trägerende ist als ortsfest anzuordnender biegesteifer Basisteil 2 ausgebildet und zur Befestigung desselben auf einem Unterbau mit zwei Bohrungen 3 versehen. Das andere Trägerende ist als biegesteifer Lastaufnehmer 4 ausgebildet und zur Befestigung oder zur Anlage eines Uebertragungsorgans für die Einleitung der zu messenden Kraft F mit einer Bohrung 5 versehen. Lastaufnehmer 4 und Basisteil 2 sind durch zwei Parallelführung für den Last aufnehmer 4 bildende biegeelastische Lenker 6 und 7 miteinander verbunden. Die Lenker haben durch Materialschwächung ausgeprägte Biegeabschnitte 8, 9 bzw. 1o, 11. Zwischen diesen Biegeabschnitten sind die Lenker 6, 7 steif. An den Biegeabschnitten 8 und 9 des Lenkers 6 sind auf dessen Aussenseite Dehnungsmessstreifen 12 und 13 angeordnet, welche vorzugsweise als Dünnschichtsensoren ausgebildet sind. Eine Lösungsvariante besteht darin, dass an den Biegeabschnitten 10 und 11 des anderen Lenkers 7 ebenfalls Dehnungsmessstreifen vorgesehen sind.

Die Biegeabschnitte 8 bis 11 sind keilartig ausgebildet, wobei das dickere Ende bei den Biegeschnitten 8 und 10 dem Basisteil 2 und bei den Biegeabschnitten 9 und 11 dem Lastaufnehmer 4 zugewandt ist. Die Keilform wird durch einen Parabelabschnitt gebildet, der bei kleinen Kraftmesszellen nahezu eine Gerade ist. Durch entsprechende Bemessung des Keilwinkels (bzw. des Parabelaabschnitts) wird erreicht, dass jeder Biegeabschnitt unter Last über seine ganze Länge eine gleichmässige Materialdehnung bzw. -stauchung erfährt und dementsprechend der zugeordnete Dehnungsmessstreifen ebenfalls über seine ganze Länge gleichmässig beansprucht wird. Ferner ist die mittlere Materialdicke an den dem Basisteil 2 näher liegenden Biegeabschnitten 8 und 10 grösser als an den anderen Biegeabschnitten 9 und 11, und zwar ist das Dickenverhältnis so gewählt, dass unter Last an den Biegeabschnitten 8 und10 gleich grosse Spannungen auftreten wie an den Biegeabschnitten 9 und 11.

Das Längsprofil des Kraftsensors 1, d.h. das die Biegeabschnitte bestimmende Hohlprofil, wird im Funkenerosionsverfahren hergestellt. Vorzugsweise werden mehrere Kraftmesszellen gleichzeitig aus einem Stück hergestellt und danach vereinzelt. Ein geeignetes Verfahren dazu wird anhand der Fig. 2 erläutert.

Aus einer länglichen Platte 14 wird eine Reihe von Kraftmesszellen in der Weise angefertigt, dass zunächst die Bohrungen 3 und 5 hergestellt werden und dann im Funkenerosionsverfahren mit Drahtelektrode am Querprofil 15 der Platte 14 das Längsprofil der Kraftsensoren 1 über die ganze Plattenlänge erzeugt wird. In einem weiteren Verfahrensschritt wird auf der Oberfläche 16 der Platte 14 eine Mehrzahl jeweils gleicher Masken für das stufenweise Auftragen von Dünnschichtsensoren 17 durch ein Multikopieverfahren hergestellt. Nach dem Auftragen der Dünnschichtsensoren 17 kann dann die Platte 14 durch quer zur Längsrichtung der Platte verlaufende Trennschnitte 18 in die einzelnen Kraftmesszellen zerteilt werden. Dabei ist die genannte Reihenfolge nicht zwingend. So kann z.B. die Funkenerosion auch nach dem Auftragen der Dünnschichtsensoren stattfinden. Selbstverständlich können nach diesem Verfahren auch mehrere Reihen von Kraftmesszellen aus einer entsprechend breiteren Platte gleichzeitig hergestellt werden. Die erfindungsgemässe Ausgestaltung der Kraftmesszellen ist besonders vorteilhaft bei kleinen Zellen mit grosser Maximallast.

## Patentansprüche

1. Kraftmesszelle mit einem Kraftsensor (1) in Form eines Biegeträgers, bei dem das eine Trägerende als biegesteifer Basisteil (2) und das andere Trägerende als biegesteifer Lastaufnehmer (4) ausgebildet sind und der Lastaufnehmer (4) durch zwei biegeelastische Lenker (6, 7) mit durch Materialschwächung ausgeprägten Biegeabschnitten (8 bis 11) mit dem Basisteil (2) verbunden ist, und mit an dem Biegeabschnitten wenigstens eines Lenkers (6) angeordneten Dehnungsmessstreifen (12, 13) zur Erzeugung eines von der zu messenden Kraft (F) abhängigen elektrischen Signals, dadurch gekennzeichnet, dass die mittlere Materialdicke an den dem Basisteil (2) näher liegenden Biegeabschnitten (8, 10) der Lenker (6, 7) um soviel grösser ist als an den anderen Biegeabschnitten (9, 11), dass an allen Biegeabschnitten unter Last gleich grosse Spannungen auftreten.

2. Kraftmesszelle nach Anspruch 1, dadurch gekennzeichnet, dass die Biegeabschnitte (8 bis 11) keilartig ausgebildet sind, wobei jeweils das dickere Ende eines Biegeabschnittes dem diesem näher gelegenen Trägerende zugewandt ist.

3. Kraftmesszelle nach Anspruch 1, dadurch gekennzeichnet, dass die Dehnungsmessstreifen (12, 13) als Dünnschichtsensoren ausgebildet sind.

4. Verfahren zur Herstellung einer Kraftmesszelle nach Anspruch 1, dadurch gekennzeichnet, dass das Längsprofil des Kraftsensors (1) durch Funkenerosion erzeugt wird.

5. Verfahren nach Anspruch 4, zur gleichzeitigen Herstellung eine Reihe von Kraftmesszellen, dadurch gekennzeichnet, dass am Querprofil (15) einer länglichen Platte (14) das Längsprofil der Kraftsensoren (1) über die ganze Plattenlänge im Funkenerosionsverfahren mit Drahtelektrode erzeugt wird, dass auf wenigstens einer Oberfläche (16) der Platte (14) eine Mehrzahl jeweils gleicher Masken für das stufenweise Auftragen von Dünnschichtsensoren (17) durch ein Multikopieverfahren hergestellt wird, und dass nach dem Auftragen der Dünnschichtsensoren (17) und dem Erzeugen des Längsprofils die Platte (14) durch quer zur Längsrichtung der Platte verlaufende Trennschnitte (18) in die einzelnen Kraftmesszellen zerteilt wird.

## Revendications

1. Cellule de mesure de force avec une poutre sensible à la flexion comme élément (1) sensible à la force, l'une des extrémités de la poutre étant exécutée sous forme d'une partie de base (2) résistant à la flexion, et l'autre extrémité de la poutre étant exécutée sous forme d'un récepteur (4) de la charge, résistant à la flexion, le récepteur (4) de la charge étant relié à la partie de base (2) par l'intermédiaire de deux biellettes élastiques (6, 7) comportant chacune des parties flexibles (8 à 11) de section affaiblie, et les parties flexibles d'au moins une des biellettes (6) étant pourvues de jauges extensométriques (12, 13) destinées à produire un signal électrique dépendant de l'importance de la force (F) à mesurer, caractérisée par le fait que la section moyenne de la matière est plus forte au niveau des parties flexibles (8, 10) des biellettes (6, 7) situées à proximité de la partie de base (2) qu'au niveau des autres parties flexibles (9, 11), de telle sorte que toutes les parties flexibles supportent, lorsqu'elles sont soumises à une charge, des contraintes identiques.

2. Cellule de mesure de force selon la revendication 1, caractérisée par le fait que les parties flexibles (8 à 11) sont réalisées en forme de coin, l'extrémité plus forte de chaque partie flexible étant tournée vers l'extrémité la plus proche de la poutre.

3. Cellule de mesure de force selon la revendication 1, caractérisée par le fait que les jauges extensométriques (12, 13) sont réalisées sous forme de jauges à couche mince.

4. Procédé de fabrication d'une cellule de mesure de force selon la revendication 1, caractérisé par le fait que le profil longitudinal de l'élément (1) sensible à la force est généré par étincelage.

5. Procédé selon la revendication 4, permettant la fabrication simultanée d'une série de cellules de mesure de force, caractérisé par le fait que l'on génère dans le profil transversal (15) d'une plaque longiligne (14) le profil longitudinal des éléments (1) sensibles à la force, en employant le procédé d'étincelage avec un fil-électrode sur toute la longueur de la plaque, que l'on dispose une multitude de masques identiques sur au moins une des surfaces (16) de la plaque (14), de façon à permettre l'application en passes successives par multicopiage des jauges (17) à couche mince, et par le fait qu'après l'application des jauges (17) à couche mince et après la génération du profil longitudinal, on découpe la plaque (14), suivant des lignes de découpage (18) perpendiculaires à l'axe longitudinal de la plaque, de façon à obtenir les cellules individuelles de mesure de force.

**Claims**

1. A force measuring cell comprising a force sensor (1) in the form of a bending carrier in which one end of the carrier is in the form of a flexurally stiff base portion (2) and the other end of the carrier is in the form of a flexurally stiff load receiving means (4) and the load receiving means (4) is connected to the base portion (2) by two flexurally resilient links (6, 7) with bending portions (8 to 11) which are marked by a weakening of material, and comprising strain gauges (12, 13) arranged at the bending portions of at least one link (6), for producing an electrical signal which is dependent on the force (F) to be measured, characterised in that the mean material thickness at the bending portions (8, 10) of the links (6, 7), which are closer to the base portion (2), is so much greater than at the other bending portions (9, 11) that stresses of equal magnitude occur at all bending portions under load.

2. A force measuring cell according to claim 1 characterised in that the bending portions (8 to 11) are of a wedge-like configuration, wherein the thicker end of each bending portion is towards the end of the carrier which is closer to same.

3. A force measuring cell according to claim 1 characterised in that the strain gauges (12, 13) are in the form of thin film sensors.

4. A process for the production of a force measuring cell according to claim 1 characterised in that the longitudinal profile of the force sensor (1) is produced by spark erosion.

5. A process according to claim 4 for the simultaneous production of a row of force measuring cells characterised in that the longitudinal profile of the force sensors (1) is produced on the transverse profile (15) of an elongate plate (14) over the entire length thereof by a spark erosion process with a wire electrode, that a plurality of respectively identical masks for the stepwise application of thin film sensors (17) is produced by a multicopy procedure on at least one surface (16) of the plate (14) and that after application of the thin film sensors (17) and production of the longitudinal profile the plate (14) is divided into the individual force measuring cells by severing cuts (18) which extend transversely with respect to the longitudinal direction of the plate.

FIG. 1

FIG. 2